# EUROPEAN PATENT SPECIFICATION

(11) **EP 3 551 941 B1**
(45) Date of publication and mention of the grant of the patent: **31.03.2021**
(21) Application number: 17792072.5
(22) Date of filing: 01.11.2017
(51) Int. Cl.: F24C 15/32, A21B 3/04

(54) **AN OVEN COMPRISING A WATER TANK**
OFEN MIT EINEM WASSERTANK
FOUR DOTÉ D'UN RÉSERVOIR À EAU

(30) Priority: 08.12.2016 TR 201618097
(43) Date of publication of application: 16.10.2019
(73) Proprietor: Arçelik Anonim Sirketi, 34445 Istanbul (TR)
(72) Inventor: KAYISDAG, Varol, 34950 Istanbul (TR); CENGIZ, Osman, 34950 Istanbul (TR); AYVAZOGLU, Cumhur, 34950 Istanbul (TR); YAMAN, Yalcin, 34950 Istanbul (TR); MAMATOGLU, Mehmet Murat, 34950 Istanbul (TR); HASANREISOGLU, Ali Levent, 34950 Istanbul (TR)
(86) International application number: PCT/EP2017/077939
(87) International publication number: WO 2018/103966

(56) References cited:
- EP-A1- 1 628 079
- EP-A1- 2 466 214
- EP-A1- 2 550 902
- EP-A1- 2 993 416
- FR-A1- 2 958 725

## Description

The present invention relates to an oven comprising a water tank.

In ovens, the cooking process is generally performed by operating together the heaters and the fan disposed in the oven cavity. The hot air heated by the heaters disposed on the ceiling, the base or the rear wall of the oven cavity is distributed into the oven cavity by means of the fan. In cooking devices that have the steam cooking function, the steam cooking is performed by delivering the steam obtained from the water heated in the steam generator to the cooking chamber. However, the placing of the water tank into the oven that enables water to be delivered to the steam generator and the filling of the water tank by the user create a difficulty.

Documents EP1628079 A1, FR2958725 A1, EP2466214 A1, EP2550902 A1 and EP2993416 A1 disclose state of the art steam ovens relevant for the invention.

The aim of the present invention is the realization of an oven comprising a water tank with facilitated access.

The oven realized in order to attain the aim of the present invention, explicated in the first claim and the respective claims thereof, comprises an oven cavity wherein the ingredients to be cooked are placed; a casing in the form of a box with the front side open and that surrounds the oven cavity; a panel that is disposed on the casing; a steam generator that is disposed on the casing; a water tank that is disposed on the casing and that enables water to be delivered to the steam generator; an opening that is arranged on the panel and that provides access to the water tank, and a cover that is disposed over the opening and that has an open position and a closed position.

The oven of the present invention comprises a motor that is disposed on the casing, and the cover that is enabled to be opened and closed by being moved by means of the motor. The cover is enabled to be opened and closed by means of the motor without the need for the user to apply force directly on the cover. As the motor is activated, the cover is enabled to be moved by means of the motion transmitted from the motor shaft to the cover. The cover completely closes the opening when in the closed position, and enables the user to access the water tank by moving outwards from the opening when brought to the open position.

According to the present invention, the oven comprises a mounting plate that is disposed on the cover; at least one pin that is disposed on the mounting plate; a carrier plate that is disposed on the casing and whereon the motor is disposed, and at least one channel that is arranged on the carrier plate and wherein the pin is placed. The pin that extends outwards from the base of the mounting plate is fitted into the channel when the mounting plate is placed on the carrier plate. As the cover is moved from the open position to the closed position or from the closed position to the open position, the pin that is disposed on the mounting plate moves together with the cover. The movement of the cover is enabled to be guided by means of the movement of the pin inside the channel. As the cover is moved from the open position to the closed position or from the closed position to the open position, the pin bears against the ends of the channel, and thus the movement of the cover is limited by means of the channel. Moreover, the cover is enabled to be opened and closed by being slid by means of the forward and backwards movement of the pin inside the channel.

In another embodiment of the present invention, the channel comprises a first channel that enables the cover to be moved in a (z) axis extending perpendicular to the plane of the panel, and a second channel that enables the cover to be moved in an (x) axis that extends in the horizontal direction. The pin is fitted into the first channel when the cover is in the open position, and the pin moves to the second channel by moving along the first channel when the cover is moved from the closed position to the open position, and when the pin moves to the end of the second channel, the cover comes to the open position. The first channel guides the pin so as to move the cover outwards from the panel when the cover is moved from the closed position to the open position, and thus the cover is enabled to move forward from the body of the oven. The second channel moves the cover in an (x) axis extending in the horizontal direction so as to bring the same onto the panel after the pin moves to the second channel from the first channel. The user is provided access to the water tank by completely opening the front of the opening when the cover comes to the closed position. When the cover is moved from the closed position to the open position, the pin first moves along the second channel and enables the cover to be moved towards the opening in the (x) axis extending in the horizontal direction. The cover is brought in front of the opening when the movement of the pin inside the second channel ends. The movement of the pin inside the first channel enables the cover to be moved towards the panel in the (z) axis extending perpendicular to the plane of the panel. When the movement of the pin inside the first channel is ended, the cover is seated to the opening so as to be at the same axis with the panel surface and the opening is enabled to be completely closed by means of the cover.

In another embodiment of the present invention, the oven comprises a transmission element that is disposed on the mounting plate so that one end thereof extends towards the motor, that has a plurality of teeth thereon and that enables the mounting plate to be moved by moving by means of the motor. One end of the transmission element is connected to the gear disposed on the motor and the other end is connected to the mounting plate. Thus, as the motor is activated, the movement received from the motor is transmitted to the mounting plate by means of the transmission element and the cover is enabled to be moved from the closed position to the open position or from the open position to the closed position.

In another embodiment of the present invention, the oven comprises a housing that is disposed on the transmission element and wherein the mounting plate is placed. The mounting plate and the transmission element are enabled to move together by means of the housing that has the same form as the mounting plate. The mounting plate is seated to the housing so that no gap remains therebetween.

In another embodiment of the present invention, the oven comprises at least one inclined side that is disposed on the mounting plate. The force transmitted to the mounting plate by the transmission element is distributed both in the (x) axis and in the (z) axis by means of the inclined surface of the mounting plate during the movement of the cover. Thus, the cover is enabled to move forward continuously both in the (x) axis and in the (z) axis without getting stuck.

In another embodiment of the present invention, the oven comprises at least one protrusion that is disposed on the mounting plate, and at least one recess that is disposed on the transmission element and wherein the protrusion is fitted. When the transmission element is seated on the mounting plate, the protrusion on the mounting plate enables a gapless firm connection to be formed between the mounting plate and the transmission element by fitting into the recess disposed on the transmission element.

In another embodiment of the present invention, the oven comprises at least one sensor that is disposed on the casing and that enables the open or closed position of the cover to be detected, and a control unit that enables the motor to be controlled according to the data received from the sensor. Whether the cover comes to the open position or to the closed position while being moved from the closed position to the open position or from the open position to the closed position is detected by means of the sensor. The control unit ends the movement of the cover by deactivating the motor according to the position information received from the sensor.

In another embodiment of the present invention, the oven comprises a button that is disposed on the panel, and the control unit that enables the motor to be activated when the button is actuated. The user can control the movement of the cover from the open position to the closed position and from the closed position to the open position by means of the button.

In another embodiment of the present invention, the oven comprises a level sensor that is disposed inside the water tank, and the control unit that controls the motor according to the data received from the level sensor. The control unit activates the motor and moves the cover to the open position when the water tank is completely emptied. Thus, the user is enabled to be warned when no water remains in the water tank.

By means of the present invention, the cover positioned in front of the water tank disposed inside the oven is moved by means of the motor, and thus the user is provided access in a more convenient fashion.

The oven realized in order to attain the aim of the present invention is illustrated in the attached figures, where:
Figure 1 - is the perspective view of an oven when the cover is in the closed position.
Figure 2 - is the perspective view of an oven when the cover is in the open position in an embodiment of the present invention.

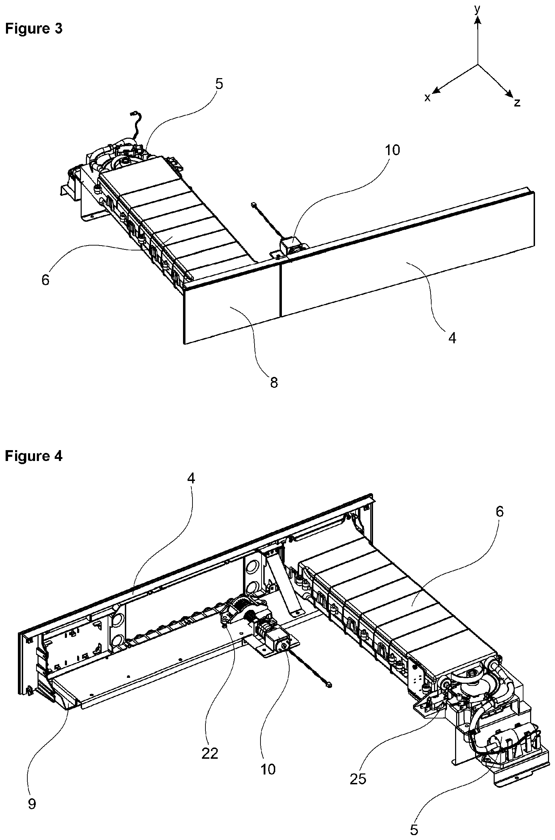

Figure 3 - is the front perspective view of the panel and the water tank in another embodiment of the present invention.
Figure 4 - is the rear perspective view of the panel and the water tank in another embodiment of the present invention.
Figure 5 - is the rear perspective view of the panel, the motor, and the transmission element in another embodiment of the present invention.
Figure 6 - is the rear perspective view of the cover in another embodiment of the present invention.

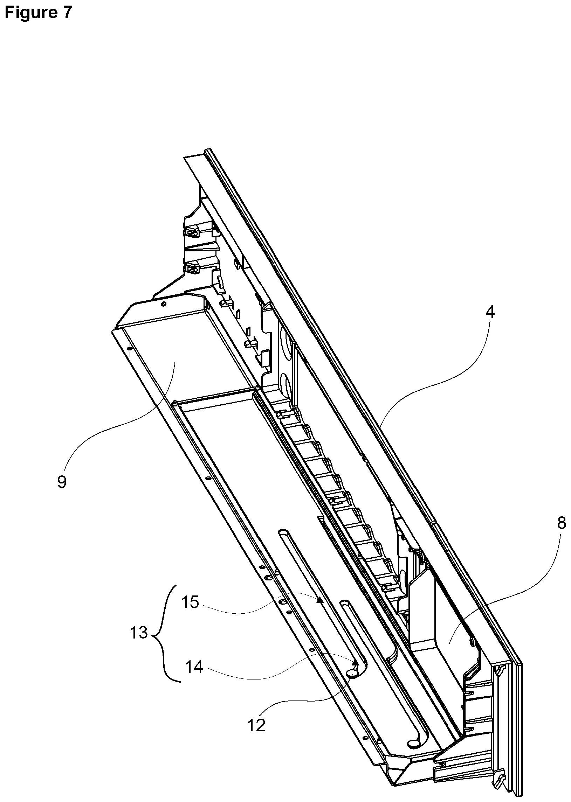

Figure 7 - is the perspective view of the panel and the carrier plate in another embodiment of the present invention.
Figure 8 - is the rear perspective view of the cover and the carrier plate in another embodiment of the present invention.
Figure 9 - is the bottom view of the cover and the carrier plate in another embodiment of the present invention.
Figure 10 - is the front schematic view of the cover and the transmission element in another embodiment of the present invention.

The elements in the figures are numbered as follows:
1. Oven
2. Oven cavity
3. Casing
4. Panel
5. Steam generator
6. Water tank
7. Opening
8. Cover
9. Carrier plate
10. Motor
11. Mounting plate
12. Pin
13. Channel
14. First channel
15. Second channel
16. Tooth
17. Transmission element
18. Housing
19. Inclined side
20. Protrusion
21. Recess
22. Sensor
23. Control unit
24. Button
25. Level sensor

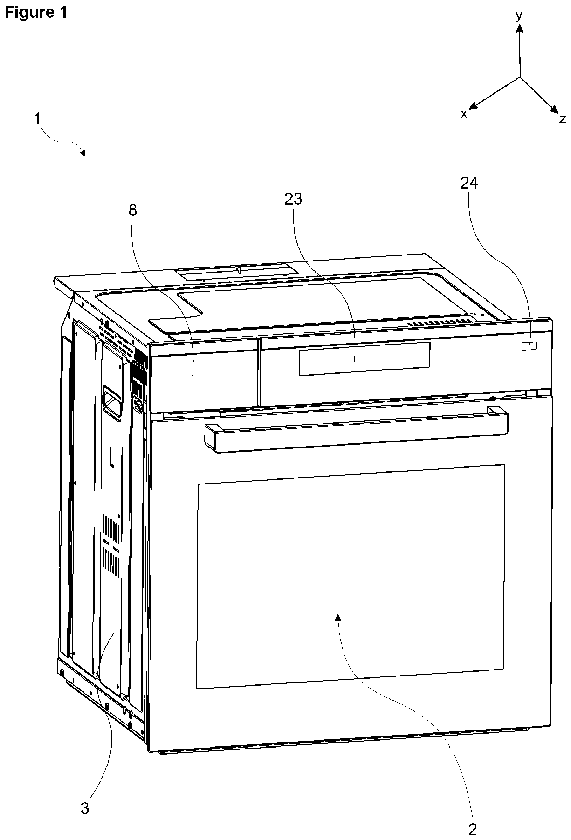

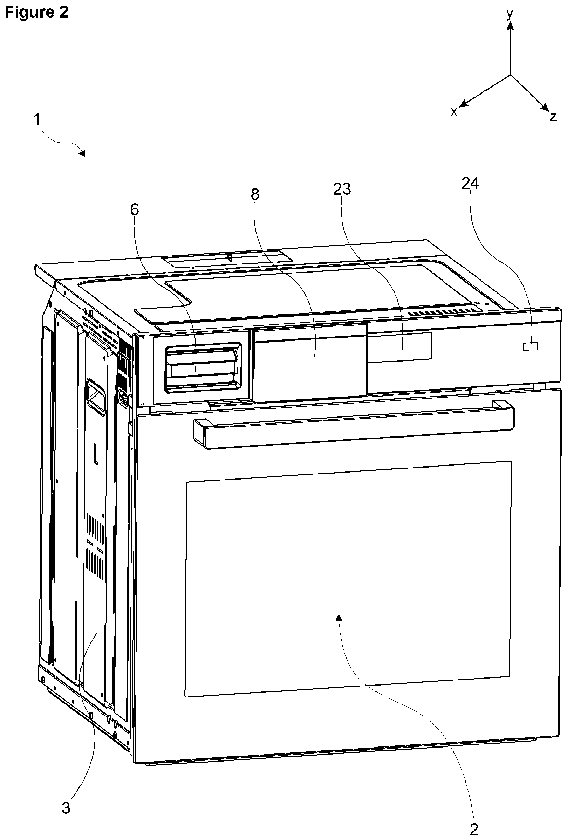

The oven (1) comprises an oven cavity (2) wherein the ingredients to be cooked are placed; a casing (3) in the form of a box with the front side open and that surrounds the oven cavity (2); a panel (4) that is disposed on the casing (3); a steam generator (5) that is disposed on the casing (3); a water tank (6) that is disposed on the casing (3) and that enables water to be delivered to the steam generator (5); an opening (7) that is arranged on the panel (4) and that provides access to the water tank (6), and a cover (8) that is disposed over the opening (7) and that has an open position and a closed position (Figure 1 and Figure 2).

The oven (1) of the present invention comprises
- a motor (10) that is disposed on the casing (3), and
- the cover (8) that is enabled to be moved from the open position to the closed position or from the closed position to the open position by means of the motor (10).

When the user desires to open the cover (8) in order to add water to the water tank (6), the movement of the cover (8) from the closed position to the open position and the movement from the open position to the closed position after the completion of the process of filling water are realized by means of the motor (10).

According to the present invention, the oven (1) comprises a mounting plate (11) disposed on the cover (8); at least one pin (12) disposed on the mounting plate (11); a carrier plate (9) that is disposed on the casing (3) and whereon the motor (10) is disposed, and at least one channel (13) that is arranged on the carrier plate (9) and wherein the pin (12) is fitted. The pin (12) is fitted into the channel (13) so as to move along the channel (13). When the cover (8) is moved by means of the motor (10), the pin (12) disposed on the mounting plate (11) moves inside the channel (13) and thus the movement of the cover (8) is enabled to be directed. As the pin (12) is moved between the two ends of the channel (13), the cover (8) is moved from the open position to the closed position or from the closed position to the open position. In this embodiment, the oven (1) preferably comprises two channels (13) that are disposed on the carrier plate (9) and two pins (12) that are disposed on the mounting plate (11). The cover (8) is enabled to be moved in a balanced manner by positioning the pins (12) in separate channels (13).

In another embodiment of the present invention, the channel (13) comprises a first channel (14) that enables the cover (8) to be moved in a (z) axis extending perpendicular to the plane of the panel (4), and a second channel (15) that enables the cover (8) to be moved in an (x) axis that extends in the horizontal direction. When the cover (8) is in the closed position, the pin (12) is located at the end of the channel (13) in the first channel (14). When the cover (8) is moved from the closed position to the open position, the pin (12) moves from the first channel (14) towards the second channel (15). When the cover (8) is moved by means of the motor (10), the pin (12) first moves along the first channel (14) and enables the cover (8) to be moved in a (z) axis extending perpendicular to the plane of the panel (4). Thus, the cover (8) is enabled to be moved outwards from the oven (1). After passing from the first channel (14) to the second channel (15), the pin (12) moves along the second channel (15) and enables the cover (8) to be moved in an (x) axis that extends in the horizontal direction. Thus, the cover (8) is moved by being slid over the panel (4). By means of the first channel (14), the cover (8) is first enabled to be moved outwards from the oven (1) and thus the cover (8) is prevented from hitting the panel (4) during the movement hereof in the (x) axis that extends in the horizontal direction. When the cover (8) is moved from the open position towards the closed position, the cover (8) is moved in a direction opposite to the first movement from the closed position to the open position. In this case, the pin (12) first moves along the second channel (15) and enables the cover (8) to be moved towards the opening (7) in the (x) axis that extends in the horizontal direction. When the cover (8) is coaxial with the opening (7), the pin (12) starts moving along the first channel (14) and thus enables the cover (8) to be moved towards the panel (4) in a (z) axis extending perpendicular to the plane of the panel (4). When the pin (12) bears against the end of the first channel (14), the cover (8) is seated on the panel (4) so as to completely cover the opening (7).

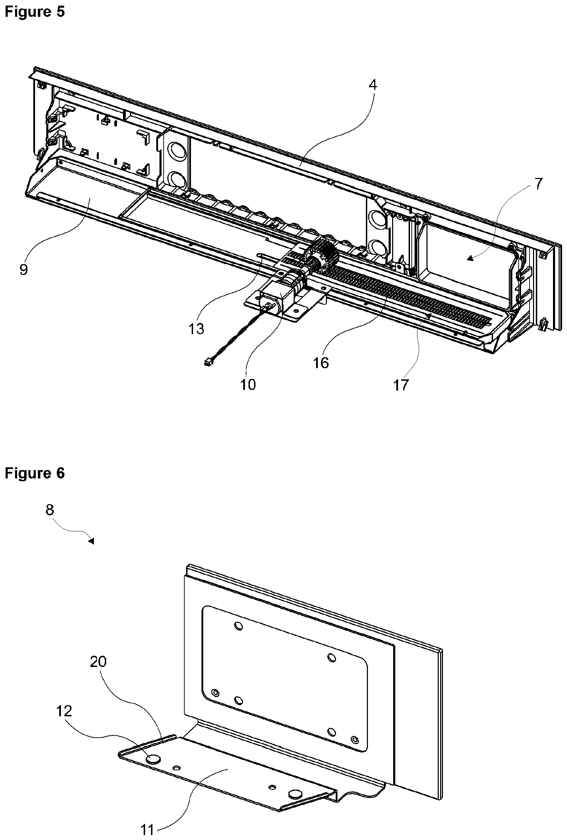

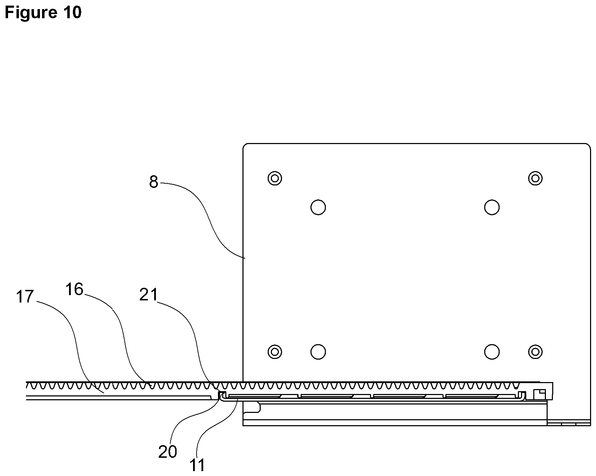

In another embodiment of the present invention, the oven (1) comprises a transmission element (17) that is disposed on the mounting plate (11) so that one end thereof extends towards the motor (10), that has a plurality of teeth (16) thereon and that enables the mounting plate (11) to be moved by moving by means of the motor (10). The motor (10) gear engages with the teeth (16) that are disposed on the transmission element (17) and thus the movement of the motor (10) is transmitted to the cover (8) by means of the transmission element (17) as the motor (10) is activated (Figure 5 and Figure 10).

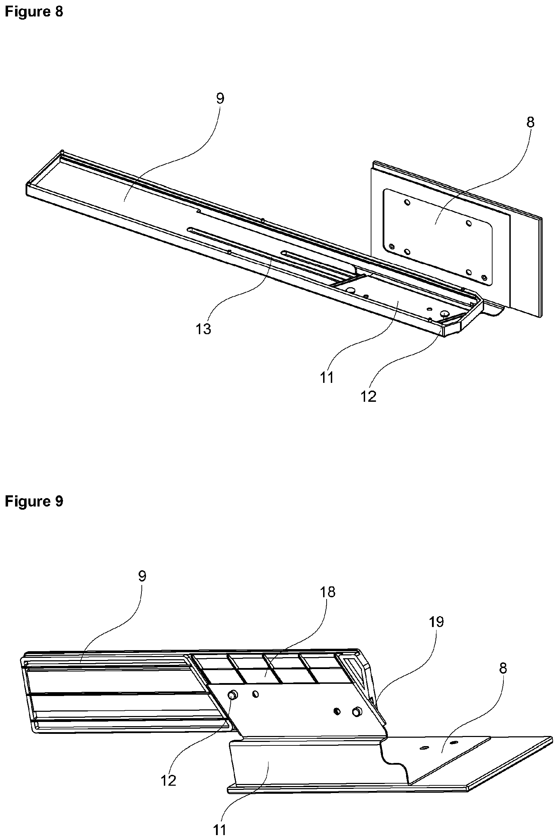

In another embodiment of the present invention, the oven comprises (1) a housing (18) that is disposed on the transmission element (17) and wherein the mounting plate (11) is placed. The mounting plate (11) is placed into the housing (18), and when the transmission element (17) is moved by means of the motor (10), the mounting plate (11) moves together with the transmission element (17). Thus, the cover (8) is enabled to be moved by means of the transmission element (17) (Figure 9).

In another embodiment of the present invention, the oven (1) comprises at least one inclined side (19) that is disposed on the mounting plate (11). By means of the inclined sides (19) that are preferably disposed on both opposite sides of the mounting plate (11), the thrust force applied onto the mounting plate (11) by the transmission element (17) is distributed both in the (x) axis and in the (z) axis. Thus, the movement of the mounting plate (11) in the (z) axis extending perpendicular to the plane of the panel (4) is more easily directed, and the movement of the cover (8) is enabled to be realized in an easier manner (Figure 9).

In another embodiment of the present invention, the oven (1) comprises at least one protrusion (20) that is disposed on the mounting plate (11), and at least one recess (20) that is disposed on the transmission element (17) and wherein the protrusion (20) is fitted. When the transmission element (17) is seated on the mounting plate (11), the protrusion (20) disposed on the mounting plate (11) is seated into the recess (11) disposed on the transmission element (17) and forms a gapless firm connection between the mounting plate (11) and the transmission element (17). Thus, the joint movement of the mounting plate (11) and the transmission element (17) is efficiently provided, and the movement of the cover (8) is smoothly realized.

In another embodiment of the present invention, the oven (1) comprises at least one sensor (22) that is disposed on the casing (3) and that enables the open or closed position of the cover (8) to be detected, and a control unit (23) that enables the motor (10) to be controlled according to the data received from the sensor (22). The pin (12) that is disposed on the mounting plate (11) bears against the ends of the channel (13) when the cover (8) is brought to the open position or to the closed position. The sensor (22) detects the position of the pin (12) in the channel (13) and thus determines whether the cover (8) is brought to the open position or to the closed position. When the cover (8) is brought from the open position to the closed position or from the closed position to the open position, the control unit (23) deactivates the motor (10) and ends the movement of the cover (8).

In another embodiment of the present invention, the oven (1) comprises a button (24) that is disposed on the panel (4), and the control unit (23) that enables the motor (10) to be activated as the button (24) is actuated. The user can control the movement of the cover (8) from the open position to the closed position and from the closed position to the open position by means of the button (24). Thus, the movement of the cover (8) is facilitated, and user satisfaction is improved.

In another embodiment of the present invention, the oven (1) comprises a level sensor (25) that is disposed in the water tank (6), and the control unit (23) that controls the motor (10) according to the data received from the level sensor (25). The amount of water remaining in the water tank (6) can be detected by means of the level sensor (25). If the detected water level decreases below a limit level predetermined by the 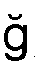 , the control unit (23) activates the motor (10) and enables the cover (8) to be moved from the closed position to the open position. Thus, the user is enabled to be warned to add water to the water tank (6).

In the oven (1) of the present invention, the movement of the cover (8) from the open position to the closed position and from the closed position to the open position, that opens into the water tank (6) that provides water transmission to the steam generator (5), is realized by a motor (10). Thus, adding water to the water tank (6) is realized more easily, and user satisfaction is improved.

## Claims

1. An oven (1) **comprising** an oven cavity (2) wherein the ingredients to be cooked are placed; a casing (3) in the form of a box with the front side open and that surrounds the oven cavity (2); a steam generator (5) that is disposed on the casing (3); a water tank (6) that is disposed on the casing (3) and that enables water to be delivered to the steam generator (5); an opening (7) that is disposed on the panel (4), and that provides access to the water tank (6); and a cover (8) that is disposed above the opening (7), and that has an open position and a closed position, a motor (10) that is disposed on the casing (3), and the cover (8) that is enabled to be moved to the closed position form the open position or to the open position from the closed position by means of the motor (10) **characterized by** a mounting plate (11) disposed on the cover (8); at least one pin (12) disposed on the mounting plate (11); a carrier plate (9) that is disposed on the casing (3) and whereon the motor (10) is disposed, and at least one channel (13) that is arranged on the carrier plate (9) and wherein the pin (12) is fitted.

2. An oven (1) as in Claim 1, **characterized by** the channel (13) comprising a first channel (14) that enables the cover (8) to be moved in a (z) axis extending perpendicular to the plane of the panel (4), and a second channel (15) that enables the cover (8) to be moved in an (x) axis that extends in the horizontal direction.

3. An oven (1) as in any one of the Claims 1 or 2, **characterized by** a transmission element (17) that is disposed on the mounting plate (11) so that one end thereof extends towards the motor (10), that has a plurality of teeth (16) thereon and that enables the mounting plate (11) to be moved by moving by means of the motor (10).

4. An oven (1) as in Claim 3, **characterized by** a housing (18) that is disposed on the transmission element (17) and wherein the mounting plate (11) is placed.

5. An oven (1) as in Claim 4, **characterized by** at least one inclined side (19) that is disposed on the mounting plate (11).

6. An oven (1) as in any one of the Claims 3 to 5, **characterized by** at least one protrusion (20) that is disposed on the mounting plate (11), and at least one recess (20) that is disposed on the transmission element (17) and wherein the protrusion (20) is fitted.

7. An oven (1) as in any one of the above claims, **characterized by** at least one sensor (22) that is disposed on the casing (3) and that enables the open or closed position of the cover (8) to be detected, and a control unit (23) that enables the motor (10) to be controlled according to the data received from the sensor (22).

8. An oven (1) as in Claim 7, **characterized by** a button (24) that is disposed on the panel (4), and the control unit (23) that enables the motor (10) to be activated as the button (24) is actuated.

9. An oven (1) as in any one of the Claims 7 or 8, **characterized by** a level sensor (25) that is disposed in the water tank (6), and the control unit (23) that controls the motor (10) according to the data received from the level sensor (25).

## Patentansprüche

1. Ein Ofen (1) **umfasst** einen Ofenhohlraum (2), worin die zu kochenden Zutaten platziert werden; ein Gehäuse (3) in Form eines Kastens mit offener Vorderseite, das den Ofenhohlraum (2) umgibt; einen Dampferzeuger (5), der auf dem Gehäuse (3) angeordnet ist; einen Wassertank (6), der am Gehäuse (3) angeordnet ist und die Abgabe von Wasser an den Dampferzeuger (5) ermöglicht; eine Öffnung (7), die an der Platte (4) angeordnet ist und den Zugang zum Wassertank (6) ermöglicht; eine Abdeckung (8), die über der Öffnung (7) angeordnet ist und eine offene und eine geschlossene Position aufweist; ein Motor (10), der auf dem Gehäuse (3) angeordnet ist, und die Abdeckung (8), die in die geschlossene Position bewegt werden kann, bilden die offene Position oder die geschlossene Position von der geschlossenen Position mittels des Motors (10), wobei es **gekennzeichnet ist, durch** eine Montageplatte (11), die an der Abdeckung (8) angeordnet ist; **durch** mindestens einen Stift (12), der auf der Montageplatte (11) angeordnet ist; **durch** eine Trägerplatte (9), die auf dem Gehäuse (3) angeordnet ist und dessen der Motor (10) angeordnet ist, und mindestens einen Kanal (13), der auf der Trägerplatte (9) angeordnet ist und worin der Stift (12) eingebaut ist.

2. Ein Ofen (1), wie in Anspruch 1 aufgeführt, **ist dadurch gekennzeichnet, dass** der Kanal (13) einen ersten Kanal (1) umfasst und der es ermöglicht, dass die Abdeckung (8) in einer (z)-Achse bewegt wird und sich senkrecht zu der Ebene der Palette (4) erstreckt; und einen zweiten Kanal (15), der es ermöglicht, die Abdeckung (8) in einer (x)-Achse zu bewegen, die sich in horizontaler Richtung erstreckt.

3. Ein Ofen (1), wie in Anspruch 1 oder 2 aufgeführt, **ist dadurch gekennzeichnet, dass** ein Übertragungselement (17) auf er Montageplatte (11) angeordnet ist und ein Ende von ihm sich in die Richtung des Motors (10) erstreckt, welche mehrere Zähne (16) aufweist, die es ermöglichen, die Montageplatte (11) durch Bewegung mittels des Motors (10) zu bewegen.

4. Ein Ofen (1), wie in Anspruch 3 aufgeführt, **ist dadurch gekennzeichnet, dass** ein Gehäuse (18) auf dem Übertragungselement (17) angeordnet ist, worin die Montageplatte (11) angeordnet ist.

5. Ein Ofen (1), wie in Anspruch 4 aufgeführt, **ist dadurch gekennzeichnet, dass** mindestens eine geneigte Seite (19) auf der Montageplatte (11) angeordnet ist.

6. Ein Ofen (1), wie in einem der Ansprüche von 3 bis 5 aufgeführt,, **ist dadurch gekennzeichnet, dass** mindestens ein Vorsprung (20) auf der Montageplatte (11) angeordnet ist, und mindestens eine Aussparung (20), die auf dem Übertragungselement (17) angeordnet ist und in der der Vorsprung (20) angebracht ist.

7. Ein Ofen (1), wie in einem der vorherigen Ansprüche aufgeführt, **ist dadurch gekennzeichnet, dass** mindestens ein Sensor (22) an dem Gehäuse (3) angeordnet ist und das Erfassen der offenen oder geschlossenen Position des Deckels (8) ermöglicht, und eine Steuereinheit (23), die es ermöglicht, den Motor (10) gemäß den vom Sensor (22) empfangenen Daten zu steuern.

8. Ein Ofen (1), wie in Anspruch 1 aufgeführt, **ist dadurch gekennzeichnet, dass** ein Knopf (24) an der Platte (4) angeordnet ist und der Steuereinheit (23) es ermöglicht, den Motor (10) als Knopf (24) zu betätigen.

9. Ein Ofen (1), wie in Anspruch 7 oder 8 aufgeführt, **ist dadurch gekennzeichnet, dass** ein Füllstandsensor (25), der im Wassertank (6) angeordnet ist, und die Steuereinheit (23), die den Motor (10) anhand den vom Füllstandsensor (25) empfangenen Daten steuert.

## Revendications

1. Un four (1) **comprenant** une cavité de four (2) dans laquelle sont placés les ingrédients à cuire ; un caisson (3) en forme de boîte avec le côté avant ouvert et qui entoure la cavité de four (2) ; un générateur de vapeur (5) qui est disposé sur le caisson (3) ; un réservoir d'eau (6) qui est disposé sur le caisson (3) et qui permet à l'eau d'être fournie au générateur de vapeur (5) ; une ouverture (7) qui est disposée sur le panneau (4), et qui donne accès au réservoir d'eau (6) ; et un couvercle (8) qui est disposé au-dessus de l'ouverture (7), et qui a une position ouverte et une position fermée, un moteur (10) qui est disposé sur le caisson (3), et le couvercle (8) qui peut être déplacé vers la position fermée à partir de la position ouverte ou vers la position ouverte à partir de la position fermée au moyen du moteur (10) **est caractérisé en ce qu**'une plaque de montage (11) est disposée sur le couvercle (8) ; au moins une broche (12) est disposée sur la plaque de montage (11) ; une plaque de support (9) est disposée sur le caisson (3) et sur laquelle le moteur (10) est disposé, et au moins un canal (13) est disposé sur la plaque de support (9) et dans lequel la broche (12) est montée.

2. Un four (1) comme dans la déclaration 1, **est caractérisé en ce que** le canal (13) comprend un premier canal (14) qui permet au couvercle (8) d'être déplacé dans un axe (z) s'étendant perpendiculairement au plan du panneau (4), et un second canal (15) qui permet au couvercle (8) d'être déplacé dans un axe (x) qui s'étend dans la direction horizontale.

3. Un four (1) comme dans l'une quelconque des déclarations 1 ou 2, est **caractérisé en ce qu**'il comporte un élément de transmission (17) qui est disposé sur la plaque de montage (11) de sorte qu'une extrémité de celle-ci s'étende vers le moteur (10), qui comporte une pluralité de dents (16) sur celui-ci et qui permet à la plaque de montage (11) d'être déplacée par déplacement au moyen du moteur (10).

4. Un four (1) comme dans la déclaration 3, **est caractérisé en ce qu**'il comporte un boîtier (18) qui est disposé sur l'élément de transmission (17) et dans lequel est placée la plaque de montage (11).

5. Un four (1) comme dans la déclaration 4, **est caractérisé en ce qu**'il comporte au moins un côté incliné (19) qui est disposé sur la plaque de montage (11).

6. Un four (1) comme dans l'une quelconque des déclarations 3 à 5, **est caractérisé en ce qu**'il comporte au moins une saillie (20) qui est disposée sur la plaque de montage (11), et au moins un évidement (20) qui est disposé sur l'élément de transmission (17) et dans lequel la saillie (20) est montée.

7. Un four (1) comme dans l'une quelconque des déclarations ci-dessus, **est caractérisé en ce qu**'il comporte au moins un capteur (22) qui est disposé sur le caisson (3) et qui permet de détecter la position ouverte ou fermée du couvercle (8), et une unité de commande (23) qui permet de commander le moteur (10) en fonction des données reçues du capteur (22).

8. Un four (1) comme dans la déclaration 7, **est caractérisé en ce qu**'un bouton (24) est disposé sur le panneau (4), et l'unité de commande (23) qui permet au moteur (10) d'être activé lorsque le bouton (24) est actionné.

9. Un four (1) comme dans l'une quelconque des déclarations 7 ou 8, est **caractérisé en ce qu**'un capteur de niveau (25) est disposé dans le réservoir d'eau (6), et l'unité de commande (23) qui commande le moteur (10) selon les données reçues du capteur de niveau (25).
